# EUROPEAN PATENT SPECIFICATION

(11) **EP 2 887 698 B1**
(45) Date of publication and mention of the grant of the patent: **15.02.2017**
(21) Application number: 14199829.4
(22) Date of filing: 22.12.2014
(51) Int. Cl.: H04R 25/00, G06Q 30/02

(54) **Hearing aid for playing audible advertisement**
Hörgerät zum Abspielen einer hörbaren Werbeanzeige
Prothèse auditive pour lire des publicités audibles

(30) Priority: 23.12.2013 KR 20130161344
(43) Date of publication of application: 24.06.2015
(73) Proprietor: Samsung Electronics Co., Ltd, Gyeonggi-do 443-742 (KR)
(72) Inventor: Choi, Jong Min, 443-742 Gyeonggi-do (KR); Han, Joo Man, 443-742 Gyeonggi-do (KR); Kwon, See Youn, 443-742 Gyeonggi-do (KR); Kim, Dong Wook, 443-742 Gyeonggi-do (KR); Kim, Sang Wook, 443-742 Gyeonggi-do (KR)
(74) Representative: Jacobs, Bart

(56) References cited:
- WO-A1-2011/047707
- WO-A1-2012/171045
- US-A1- 2009 238 386

## Description

### BACKGROUND

### 1. Field

The following description relates to a hearing aid.

### 2. Description of Related Art

In general, a hearing aid is a device disposed in and/or around an ear of a patient diagnosed with a hearing impairment. To aid such a patient, the hearing aid amplifies sound to help the patient hear sounds that the patient would otherwise be unable to hear. For example, sound amplification in the hearing aid includes a microphone to receive a sound input, an amplifier to amplify the sound, and a speaker to output the amplified sound. The hearing aid may transform a sound signal input that it receives from its surroundings to an auditory organ of a hearing-impaired user so that an identical level of the sound signal input to a normal person may be input to and perceived by a brain of the hearing-impaired user.

The hearing aid may be adjusted by a hearing aid fitter in accordance with a prescription. The prescription may include information about how to amplify a sound signal at a frequency within an audible frequency range in which the hearing-impaired user may experience hypoacusis. Hypoacusis denotes that the user experiences impaired hearing because the user has a deficiency with hearing organs, such as the peripheral neurosensory and conductive hearing organs

US 2009/238386 A1 is related to an ear piece that is communicatively coupled to an external device such as a smartphone. The document discusses the problem of the art, wherein text messages are normally handled by the smartphone causing possible hazardous situations as the attention of the user is diverted, e.g. dealing with text messages when driving. As a solution for this problem an earpiece is proposed which is adapted to receive and organize messages. To that end, the earpiece is provided with an ambient sound microphone, an ear canal receiver, and an ear canal microphone.

### SUMMARY

The invention is defined in the independent claims.

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

In one general aspect, a hearing aid includes an input unit configured to receive a sound input, a storage configured to store an audible advertisement, a generator configured to generate a sound signal based on the sound input and the audible advertisement, and an output unit configured to output the sound signal.

The generator may be configured to extract environment information from the sound input.

The generator may be configured to determine, based on the environment information, at least one of an operating mode for playing the audible advertisement, a playback version of the audible advertisement, and a playback pattern of the audible advertisement.

The hearing aid may further include a communication unit configured to receive the audible advertisement, determined based on the environment information.

The hearing aid may further include a recorder configured to record listening statistics associated with the audible advertisement.

The generator may be configured to generate, based on the listening statistics, a sound signal associated with a reward for listening to the audible advertisement.

The generator may be configured to generate the sound signal by controlling a ratio of loudness of the sound input to loudness of the audible advertisement.

The generator may be configured to operate in an operating mode for playing the audible advertisement each time a predetermined timing cycle occurs.

The hearing aid may further include an interface configured to receive an agreement from a user for listening to the audible advertisement, wherein the generator is configured to operate in an operating mode for playing the audible advertisement in response to the agreement being received from the user through the interface.

The interface may include at least one of a howling recognizer configured to recognize a howling effect, a voice recognizer configured to recognize a voice of the user, a touch recognizer configured to recognize a touch of the user, and a gesture recognizer configured to recognize a gesture of the user.

The hearing aid may further include a communication unit configured to communicate with an external device, wherein the communication unit is configured to receive an audible advertisement from the external device.

The hearing aid may further include a communication unit configured to communicate with an external device paired with the hearing aid.

The communication unit may be configured to receive, from the external device, a control signal to control an operating mode of the generator, and the generator may be configured to operate in the operating mode corresponding to the control signal.

The communication unit may be configured to receive an agreement from the user for listening to the audible advertisement input through the external device, and the generator may be configured to operate in the operating mode for playing the audible advertisement in response to the agreement being received from the user through the communication unit.

The communication unit may be configured to transmit, to the external device, a signal indicating whether the audible advertisement is to be listened to and the external device may be configured to record listening statistics associated with the audible advertisement.

The communication unit may be configured to receive listening statistics information associated with the audible advertisement from the external device, and the generator may be configured to generate a sound signal associated with a reward for listening to the audible advertisement based on the received listening statistics information.

The communication unit may be configured to receive, from the external device, a sound signal associated with a reward for listening to the audible advertisement, and the external device may be configured to generate a sound signal associated with the reward based on listening statistics associated with the audible advertisement.

In another aspect, a hearing aid method includes receiving a sound input, obtaining an audible advertisement, generating a sound signal based on the sound input and the audible advertisement, and outputting the sound signal.

The generating may include determining at least one of an operating mode for playing the audible advertisement, a playback version of the audible advertisement, and a playback pattern of the audible advertisement.

The obtaining may include receiving an audible advertisement determined based on environment information.

In another general aspect, a non-transitory computer-readable storage medium includes a program for a hearing aid method, the program comprising instructions for causing a computer to perform the method presented above.

In another general aspect, a hearing aid includes a generator configured to receive a sound input and to retrieve a stored audible advertisement, and to generate a sound signal based on the sound input and the audible advertisement, and an output unit configured to output the sound signal.

The hearing aid may further include an input unit configured to receive a sound input and to provide the sound input to the generator.

The hearing aid may further include a storage configured to store an audible advertisement and to provide the audible advertisement to the generator.

The generator may be configured to extract environment information from the sound input.

The generator may configured to determine, based on the environment information, at least one of an operating mode for playing the audible advertisement, a playback version of the audible advertisement, and a playback pattern of the audible advertisement.

The hearing aid may further include a communication unit configured to receive the audible advertisement, determined based on the environment information.

The hearing aid may further include a recorder configured to record listening statistics associated with the audible advertisement.

The generator may be configured to generate, based on the listening statistics, a sound signal associated with a reward for listening to the audible advertisement.

Other features and aspects will be apparent from the following detailed description, the drawings, and the claims.

### BRIEF DESCRIPTION OF THE DRAWINGS

FIG. 1 is a block diagram illustrating an example of a hearing aid playing an audible advertisement.
FIG. 2 is a diagram illustrating examples of receiving an audible advertisement from an external device, seeking an agreement from a user prior to playing an audible advertisement, or recording listening statistics associated with an audible advertisement.
FIG. 3 is a block diagram illustrating an example of a hearing aid communicating with a paired external device.
FIG. 4 is a flowchart illustrating an example of a hearing aid playing an audible advertisement.
FIGS. 5A and 5B illustrate examples of playing audible data based on environmental information.
FIG. 6 is a flowchart illustrating an example of a hearing aid playing audible data.
FIG. 7 is a flowchart illustrating an example of a hearing aid playing an audible advertisement and audible data.

Throughout the drawings and the detailed description, unless otherwise described or provided, the same drawing reference numerals will be understood to refer to the same elements, features, and structures. The drawings may not be to scale, and the relative size, proportions, and depiction of elements in the drawings may be exaggerated for clarity, illustration, and convenience.

### DETAILED DESCRIPTION

The following detailed description is provided to assist the reader in gaining a comprehensive understanding of the methods, apparatuses, and/or systems described herein. However, various changes, modifications, and equivalents of the systems, apparatuses and/or methods described herein will be apparent to one of ordinary skill in the art. The progression of processing steps and/or operations described is an example; however, the sequence of and/or operations is not limited to that set forth herein and may be changed as is known in the art, with the exception of steps and/or operations necessarily occurring in a certain order. Also, descriptions of functions and constructions that are well known to one of ordinary skill in the art may be omitted for increased clarity and conciseness.

The features described herein may be embodied in different forms, and are not to be construed as being limited to the examples described herein. Rather, the examples described herein have been provided so that this disclosure will be thorough and complete, and will convey the full scope of the disclosure to one of ordinary skill in the art.

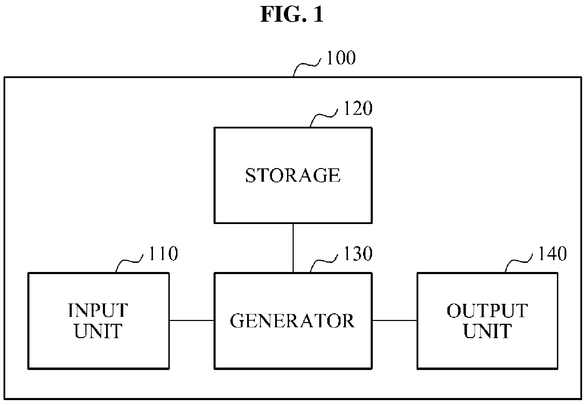

FIG. 1 is a block diagram illustrating an example of a hearing aid 100 playing an audible advertisement.

Referring to FIG. 1, the hearing aid 100 includes an input unit 110, a storage 120, a generator 130, and an output unit 140. The input unit 110 receives a sound input. In an example, the input unit 110 is provided as a microphone that generates an electrical signal corresponding to the sound input. The storage 120 stores audible content, such as an audible advertisement. For example, the storage 120 is provided in a form of a memory storing the audible advertisement, such as in the form of a sound file. Although a detailed description will follow, the storage 120 is not limited to the examples provided herein. In examples, the storage 120 is provided in various forms, for example, a non-volatile memory storing an audible advertisement in a nonvolatile manner or a memory temporally storing an audible advertisement for a streaming advertisement playback.

The generator 130 generates a sound signal using the sound input and the audible advertisement. In an example, the generator 130 includes a processor generating a sound signal, a hardware accelerator (HWA), and components for processing analog signals or digital signals or a combination of the aforementioned components. By using these components, the generator 130 generates its output signal, which it conveys to the output unit 140. The output unit 140 outputs the sound signal generated by the generator 130. In an example, the output unit 140 is provided in a form of a speaker outputting a sound signal.

For example, the generator 130 operates in a first mode for performing a main function of a hearing aid and in a second mode specifically adapted for playing an audible advertisement. In the first mode, the generator 130 generates a sound signal in which the sound input is amplified. Such amplification produces a signal that is easier to hear when it is presented as sound because it is louder. As part of the amplification, the generator 130 selectively amplifies, from a frequency spectrum included in the sound input, at least a portion of a frequency band to be transmitted to a user. For example, the generator 130 may selectively amplify, from a frequency spectrum included in the sound input, the frequency band corresponding to a voice. Hence, the generator 130 may filter out noise from the sound input, because portions of the sound that are meaningful are amplified more that irrelevant noise.

The generator 130 operates in various functional manners in the first mode. For example, the generator 130 extracts a sound environment from the sound input. The sound environment refers to an environment classified, based on sound features, such as ambient sound and acoustics around the user, into various specific environments. For example, a sound environment is classified as a very quiet environment such as a library, an environment in which noise of daily life is present such as a street, an environment in which voices of multiple people are present such as a meeting room, an environment in which background music, sound effects, and voices are present in combination such as a theater, and a very noisy environment such as a concert hall. These different sound environments affect how the sounds to be amplified are received by the hearing aid, as well as background sounds and noise are included in the sound received by the hearing aid. As a result the generator 130 processes the sound input differently based on the sound environment. For example, the generator 130 processes the sound input using at least one different predetermined parameter based on the sound environment to generate a sound signal. Examples of the at least one predetermined parameter include an amplifiable frequency band, a degree of amplification, a frequency band to be attenuated, a degree of attenuation, and a frequency band to be blocked. However, these parameters are merely examples and various combinations of these predetermined parameters as well as other parameters are used by the generator 130 to process the sound input.

In the second mode, the generator 130 controls a ratio of loudness of the sound input to loudness of the audible advertisement to generate a sound signal. For example, the generator 130 generates a sound signal in which the loudness of the audible advertisement is greater than the loudness of the sound input. Thus, the user hears an ambient sound while simultaneously listening to the audible advertisement. As an example, the generator 130 generates a sound signal in which the loudness of the sound input and the loudness of the audible advertisement are adjusted to be at a similar level. As another example, the generator 130 generates a sound signal in which the loudness of the sound input is greater than the loudness of the audible advertisement. As still another example, the generator 130 may generate a sound signal in which the sound input is blocked and/or cancelled and the loudness of the audible advertisement is adjusted to be at a predetermined level. Hence, in the second mode, the generator 130 provides the user with the ability to hear the audible advertisement while managing the user's ability to hear other sounds.

In the second mode, the generator 130 determines the ratio of the loudness of the sound input to the loudness of the audible advertisement based on a predetermined setting. In an example, the generator 130 determines the ratio of the loudness of the sound input to the loudness of the audible advertisement based on a setting input by the user. By determining this ratio, the user is able to control how much ambient noise that will be audible with respect to the audible advertisement. When the user selects a setting to hear the ambient sound while listening to the audible advertisement, the generator 130 generates a sound signal in which both the sound input and the audible advertisement are included. When the user selects a setting not to hear the ambient sound while listening to the audible advertisement, the generator 130 generates a sound signal in which the sound input is blocked and/or cancelled and only the audible advertisement is included.

In the second mode, in an example, the generator 130 also adaptively determines the ratio of the loudness of the sound input to the loudness of the audible advertisement. For example, the generator 130 extracts a sound environment from the sound input. As described, the sound environment refers, for example, to an environment classified based on a sound feature around the user into various specific environment types. For example, environment types include a very quiet environment such as a library, an environment in which noise of daily life is present such as a street, an environment in which voices of multiple people are present such as a meeting room, an environment in which background music, sound effects, and voices are present in combination such as a theater, and a very noisy environment such as a concert hall. Hence, the environment types indicate information that characterizes the amount and type of noise. In this example, the generator 130 adaptively determines the ratio of the loudness of the sound input to the loudness of the audible advertisement based on the sound environment. For example, the generator 130 processes the sound input and the audible advertisement differently, using the at least one predetermined parameter to generate a sound signal. The at least one predetermined parameter include the ratio of the loudness of the sound input to the loudness of the audible advertisement, a frequency band to be amplified in a frequency spectrum of the sound input, and a frequency band to be attenuated or blocked in the frequency spectrum of the sound input. Thus, the at least one predetermined parameter includes information indicative of the desired relationship in the output sound between the audible advertisement and the sound input.

The generator 130 has the opportunity to convert the operating mode every predetermined cycle, from the first mode for performing a main function as a hearing aid to the second mode for playing an audible advertisement. For example, the generator 130 has the opportunity to convert the operating mode from the fist mode to the second mode once an hour. In an example, the predetermined cycle is set by the user, so that the user decides how often the operating mode is able to change. As another example, the predetermined cycle is set in accordance with a contract or consensus between the user and an advertiser or between the user and a provider of the hearing aid. Also, in an example, the generator 130 converts the operating mode from second mode back to the first mode after the audible advertisement is played in the second mode.

The generator 130 determines, based on environment information as discussed above, at least one of the operating mode for playing an audible advertisement, a playback version of the audible advertisement, and a playback pattern of the audible advertisement. By making this determination, the generator 130 determines how best to present the audible advertisement. For example, the environment information includes time information, location information, moving speed information, sound environment information, and hearing aid profile information. The hearing aid profile information includes hearing aid information, hearing aid fitting information, information on auditory characteristics of a user of a hearing aid, and information on hearing aid auditory processing characteristics.

In an example, the generator 130 adaptively determines, based on the environment information as discussed above, whether to operate in the second mode for playing the audible advertisement. For example, the generator 130 determines whether to operate in the second mode based on a combination of elements included in the environment information. With respect to a case in which the time information indicates 7:30 AM and the location information indicates a home of the user, the generator 130 potentially determines that the user is having breakfast at home. In such a case, the generator 130 determines that the user is in a situation suitable for listening to an audible advertisement and operates in the second mode for playing the audible advertisement. For example, because the generator 130 infers that the user is having breakfast, it potentially infers that it is appropriate to play an audible advertisement for a breakfast cereal or for a kitchen appliance to target the advertisement to the user.

In another case, when the time information indicates 8:30 AM and the moving speed information indicates a moving speed of a subway train, the generator 130 potentially determines that the user is commuting to work via train. In such a case, the generator 130 potentially determines that the user is in a situation suitable for listening to an audible advertisement and operates in the second mode for playing an audible advertisement. For example, because the generator 130 infers that the user is commuting, it potentially infers that it is appropriate to play an audible advertisement for an advertiser who wishes to target commuting professionals, to target the advertisement to the user.

In an example, the generator 130 determines whether the user views or listens to mass media content by analyzing sound environment information. In such an example, the generator 130 analyzes the sound environment information and determines a time point at which an advertisement appears during the mass media. In this case, the generator 130 operates in the second mode for playing an audible advertisement so that the user may listen to the audible advertisement appearing in the mass media content.

The generator 130 also adaptively determines whether to operate in the second mode for playing an audible advertisement based on both the predetermined cycle and the environment information. For example, when the location information indicates a company that employs the user and the sound environment information indicates a meeting room, the generator 130 determines that the user is in a meeting at work. In this case, the generator 130 determines that the user is not in a situation suitable for listening to an audible advertisement, because the user is busy with the meeting. As a result, the generator 130 does not operate in the second mode for playing the audible advertisement. Also, when the predetermined cycle approaches and the generator 130 determines that the user is in a situation suitable for listening to an audible advertisement, the generator 130 potentially operates in the second mode for playing an audible advertisement.

In an example, the generator 130 adaptively determines, based on the environment information, the playback version of an audible advertisement suitable for a user environment. For example, the generator 130 determines whether the user is alone or with someone else based on the environment information. For example, in response to the generator 130 determining that the user is alone, the generator 130 may generate a sound signal including a full version of an audible advertisement. As another example, in response to the generator 130 determining that the user is with someone else, the generator 130 may generate a sound signal including a brief version of an audible advertisement. However, these are merely examples and other ways of providing different versions of an audible advertisement are provided in different examples to provide a version of an audible advertisement that is suitable for a user environment.

In another example, the generator 130 obtains an audible advertisement from the storage 120. For example, the storage 120 stores various versions of an audible advertisement predetermined based on a playback time of the audible advertisement. In such an example, the generator 130 selects a version of the audible advertisement corresponding to an adaptively determined playback time.

In another example, the generator 130 dynamically generates a brief version of the audible advertisement using a full version of the audible advertisement. For example, the generator 130 extracts a portion including a specific voice from the audible advertisement when generating a sound signal including the brief version of the audible advertisement. In such an example, the generator 130 includes only the voice portion in the sound signal to generate the sound signal including the brief version of the audible advertisement.

Also, the generator 130 potentially adjusts a playback speed of the audible advertisement when generating the sound signal including the brief version of the audible advertisement. In an example, the generator 130 adjusts the playback speed of the audible advertisement to be fast, so as to generate the sound signal including the brief version of the audible advertisement.

In another example, the generator 130 adaptively determines, based on the environment information, the playback pattern of an audible advertisement suitable for a user environment. In such an example, the generator 130 divides the audible advertisement into multiple portions. For example, the generator 130 divides the audible advertisement into the multiple portions so that a voice included in the audible advertisement is not unnaturally disconnected. In such an example, the generator 130 generates a sound signal using one of the divided portions. In an example, the unused remaining portions among the divided portions are recorded in the storage 120 for a subsequent playback of the audible advertisement. The generator 130 also potentially generates a sound signal using the recorded information so that the remaining portions may be subsequently played in the next playback.

In an example, the user is provided with a reward for listening to an audible advertisement stored in the storage 120. For example, the user is provided with a discount on the hearing aid as a reward for listening to an audible advertisement. As another example, the user is provided with a discount on the fitting of the hearing aid as a reward for listening to an audible advertisement. As still another example, the user is provided with cash as a reward for listening to an audible advertisement. As yet another example, the user is provided with a discount on a future purchase of the hearing aid as a reward for listening to an audible advertisement. As another example, the user is provided with accessories or services associated with the hearing aid, free of charge, as a reward for listening to an audible advertisement.

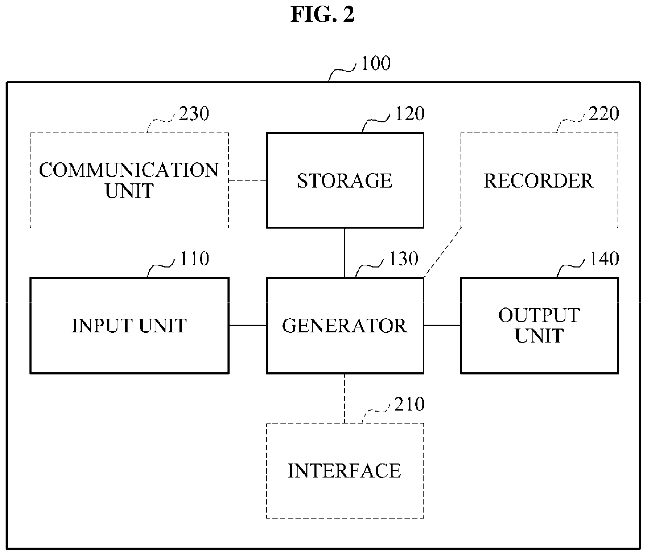

FIG. 2 is a diagram illustrating examples of receiving an audible advertisement from an external device, seeking an agreement from a user prior to playing an audible advertisement, or recording listening statistics associated with an audible advertisement. As illustrated in the example of FIG. 2, a hearing aid 100 further includes at least one of an interface 210, a recorder 220, and a communication unit 230.

For example, the interface 210 receives the agreement from the user upon listening to an audible advertisement. When the agreement is received from the user through the interface 210, a generator 130 then operates in an operating mode for playing the audible advertisement. As discussed with reference to the example of FIG. 1, the generator 130 operates in the operating mode for playing an audible advertisement every predetermined cycle or based on environment information. For example, when the operating mode is determined to be a mode in which an audible advertisement is played at a predetermined cycle, or based on the environment information, the generator 130 generates a sound signal to seek an agreement from the user. In such an example, the generator 130 generates a sound signal including a predetermined sound effect or a sound signal including an announcement requesting confirmation as to whether the user wishes to listen to an advertisement. Also, the generator 130 potentially suspends an operation in the operating mode for playing the audible advertisement until the agreement from the user is received through the interface 210. When the agreement from the user is received through the interface 210, the generator 130 then operates in the operating mode in which the audible advertisement is to be played. As another example, the interface 210 receives an arbitrary input agreement from the user governing how the audible advertisement is to be played. Thus, in examples, an audible advertisement is played at a desired time as well as at a time when the audible advertisement is to be automatically played.

In examples, the interface 210 provides various input methods. For example, the interface 210 includes at least one of a howling recognizer to recognize a howling effect, a voice recognizer to recognize a voice of the user, a touch recognizer to recognize a touch of the user, and a gesture recognizer to recognize a gesture of the user. As discussed, the howling recognizer recognizes the howling effect. For example, the user performs a motion of placing a hand over an ear in which the hearing aid is disposed to cover the ear. The motion causes an occurrence of howling and the howling recognizer receives an input of the user by recognizing the occurrence of such howling. As used herein, howling denotes such a rushing sound, which occurs when a user covers his or her ear. The generator 130 determines whether the agreement is received from the user, based on the input from the user received by the howling recognizer. In an example, when howling occurs in a right ear of the user, the generator 130 determines that the agreement is received from the user. Conversely, when howling occurs in a left ear of the user, the generator 130 determines that a refusal is received from the user. Alternatively, in another example the generator 130 determines agreement in the opposite manner, such that howling in the right ear denotes refusal and howling in the left ear denotes agreement. Alternatively, when howling is not recognized for a predetermined amount of time, the generator 130 may determine that the refusal is received from the user. Also, in an example, the generator 130 analyzes the input of the user based on duration and a howling pattern.

In an example, the voice recognizer recognizes the voice of the user. In this case, the generator 130 determines whether the agreement is received from the user using the recognized voice of the user. In another example, the touch recognizer recognizes the touch of the user. For example, a behind the ear (BTE) type hearing aid includes a support suspended behind an ear, and the support includes the touch recognizer. In an example, the touch recognizer provides a user interface for a general button type input as well as a touch input. In this example, the generator 130 determines whether the agreement is received from the user using the recognized touch of the user. For example, the generator 130 analyzes the input of the user based on whether the touch of the user is recognized in the right ear or the left ear and a pattern indicating a means by which the touch of the user is input. Based on the analysis, the gesture recognizer recognizes the gesture of the user. In an example, the gesture recognizer includes a gyrosensor. The generator 130 potentially determines whether the agreement is received from the user using an output of the gyrosensor. In another example, the generator 130 analyzes the input of the user as corresponding to various gestures of, for example, nodding, or shaking a head from side to side, based on the output of the gyrosensor.

The recorder 220 records listening statistics associated with an audible advertisement. In an example, the recorder 220 records a cumulative number of times an audible advertisement is played. In another example, the recorder 220 records a cumulative amount of time an audible advertisement is played. The recorder 220 also records, for example, which audible advertisement is played, where the audible advertisement is played, and when the audible advertisement is played. The recorder 220 also potentially record statistics on agreements or refusals received from the user. In an example, the recorder 220 resets the accumulated statistics at every predetermined time interval, for example, every month, or in response to a user input.

In an example, the generator 130 generates a sound signal associated with a reward for listening to an audible advertisement based on the statistics recorded by the recorder 220. For example, when an advertisement is listened to a predetermined threshold number of times required for a reward, the generator 130 generates a sound signal informing the user of the corresponding reward. In an example, the generator 130 generates a sound signal announcing a ratio of the predetermined threshold number of times required for the reward to an advertisement currently being played. In another example, the generator 130 generates a sound signal announcing the cumulative number of times a current advertisement is listened to or the cumulative amount of time over which a current advertisement is played.

The generator 130 also potentially operates in a third mode in which a sound signal associated with a reward for listening to an audible advertisement is played every predetermined cycle. Alternatively, the generator 130 operates in the third mode, in which a sound signal associated with a reward for listening to an audible advertisement is played, in response to a user input. When a predetermined requirement, for example, a cumulative listening requirement for a reward, is satisfied, the generator 130 operates in the third mode in which a sound signal associated with the reward for listening to an audible advertisement is played. In an example, the generator 130 converts the operating mode to a first mode after the sound signal associated with the reward for listening to the audible advertisement is played.

The communication unit 230 communicates with the external device. Through such communication, the hearing aid 100 updates a stored audible advertisement using the communication unit 230 or plays an audible advertisement in a streaming format. During the communication, in an example, the communication unit 230 receives an audible advertisement from the external device. In this case, the storage 120 potentially updates the stored audible advertisement based on the received audible advertisement.

For example, the storage 120 temporarily stores the received audible advertisement and the generator 130 generates a sound signal using the temporarily stored audible advertisement. When the audible advertisement is received through the communication unit 230, the generator 130 converts the operating mode to a second mode for playing the audible advertisement.

The hearing aid 100 adaptively determines an audible advertisement suitable for a user environment based on hearing aid profile information. For example, the communication unit 230 receives the audible advertisement that is suitable for the hearing aid profile information from the external device. When the user of the hearing aid 100 has an auditory characteristic in which the user has difficulty in hearing a low-pitched sound band, the hearing aid profile information, in an example, includes the corresponding auditory characteristic information. Based on the hearing aid profile information, the communication unit 230 receives the audible advertisement in a version or having contents adjusted so that the user is able to listen more naturally to and better understand the audible advertisement.

Also, in an example, the generator 130 determines a playback pattern, a playback operating mode, or a playback time of an audible advertisement stored in the storage 120 based on the hearing aid profile information. In such an example, the generator 130 generates a sound signal by appropriately converting the audible advertisement based on the determined playback pattern, the playback operating mode, or the playback time. In this case, an output unit 140 outputs the generated sound signal.

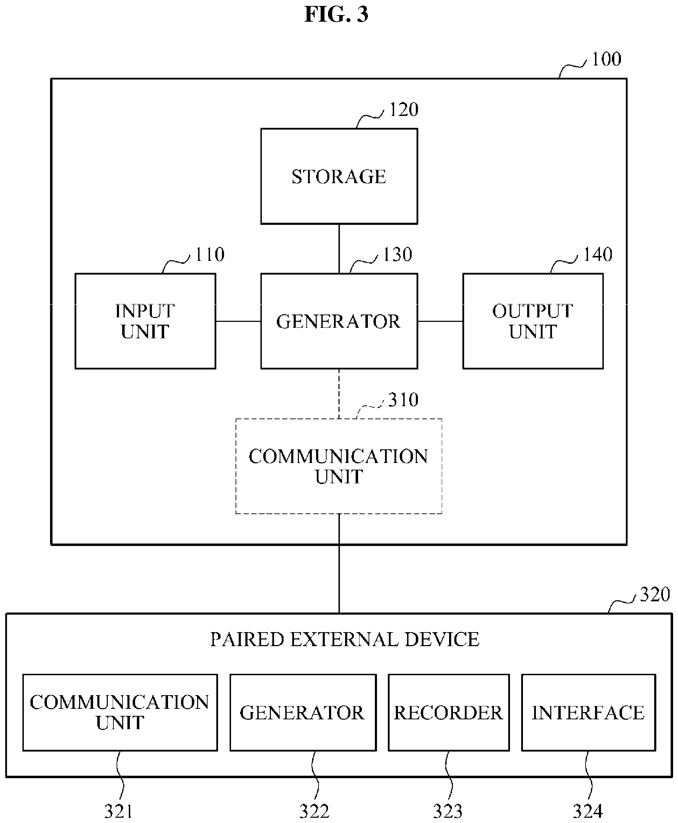

FIG. 3 is a block diagram illustrating an example of a hearing aid 100 communicating with a paired external device 320.

Referring to the example illustrated in FIG. 3, the hearing aid 100 further includes a communication unit 310 communicating with the external device 320. The external device 320 refers to a device paired with the hearing aid 100 and includes various wearable devices, such as, for example, smart glasses and a smart watch, and various computing devices, for example, a smartphone, a tablet personal computer (PC), a personal digital assistant (PDA), a laptop computer, and a desktop computer. However, these are merely examples and other external devices 320 are present in other examples.

In FIG. 3, the communication unit 310 communicates with a communication unit 321 of the external device 320. The communication between the communication unit 310 and the communication unit 321 is potentially implemented through various communication methods, for example, near field communication (NFC), Bluetooth communication, and wireless fidelity (WiFi) communication. However, these are merely example communication methods and other communications methods are used in other examples.

In the example of FIG. 3, the external device 320 generates a control signal to control an operating mode of a generator 130 of the hearing aid 100. The external device 320 may perform, in lieu of the generator 130, operations of the generator 130 associated with conversion of the operating mode illustrated with reference to FIGS. 1 and 2. In such an example, the external device 320 generates the control signal to convert the operating mode of the generator 130 from a first mode for performing a general function as a hearing aid to a second mode for playing an audible advertisement at every predetermined time interval. As another example, the external device 320 generates the control signal in response to a user input through an interface 324 included in the external device 320. As still another example, the external device 320 receives a sound input to the hearing aid 100 through the communication unit 321, and analyzes a sound environment using the received sound. In this case, the external device 320 generates the control signal based on the analyzed sound environment. When the control signal is received through the communication unit 310, the generator 130 converts the operating mode based on the control signal.

For example, the external device 320 includes at least one of the communication unit 321, a generator 322, a recorder 323, and the interface 324. In such an example, communication unit 321 communicates with the communication unit 310 of the hearing aid 100. Also in such an example, the communication unit 321 is connected to an external network. The communication unit 321 receives an audible advertisement from the external network and transmits the received audible advertisement to the hearing aid 100.

In this example, the hearing aid 100 transmits, to the external device 320, a signal indicating whether the user wishes to listen to an audible advertisement. The recorder 323 records listening statistics associated with the audible advertisement. Here, the external device 320 transmits, to the hearing aid 100, listening statistics information associated with the recorded audible advertisement. In this case, the hearing aid 100 generates a sound signal associated with a reward for listening to the audible advertisement using the received listening statistics information. Alternatively, the external device 320 directly generates a sound signal associated with the reward for listening to the audible advertisement based on the listening statistics information associated with the recorded audible advertisement. In this case, the external device 320 transmits the generated sound signal to the hearing aid 100.

Detailed descriptions provided with reference to FIGS. 1 and 2 are applicable to each module included in the external device 320 and thus, repeated descriptions are omitted here for brevity and ease of description.

For example, the communication unit 321 of the external device 320 performs at least a portion of operations performed by a communication unit 230 of the hearing aid 100 described with reference to FIG. 2. Also, the generator 322 of the external device 320 performs at least a portion of operations performed by the generator 130 of the hearing aid 100 described with reference to FIGS. 1 and 2. Also, the recorder 323 of the external device 320 performs at least a portion of operations performed by a recorder 220 of the hearing aid 100 described with reference to FIG. 2. Further, the interface 324 of the external device 320 performs at least a portion of operations performed by an interface 210 of the hearing aid 100 described with reference to FIG. 2.

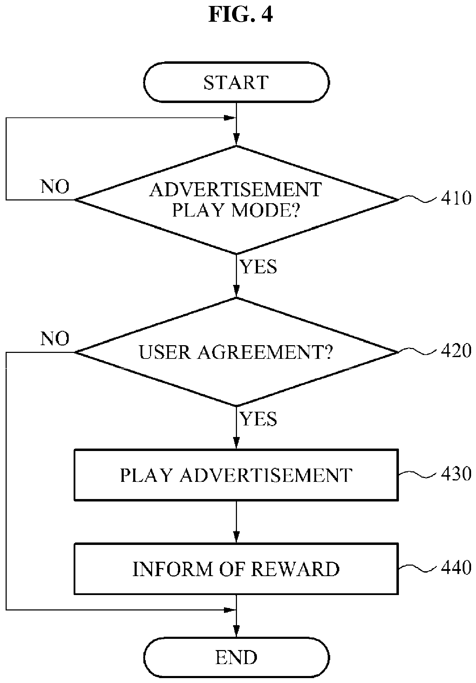

FIG. 4 is a flowchart illustrating an example of operation of a hearing aid playing an audible advertisement. Referring to FIG. 4, in 410, the method determines whether an advertisement play mode is on. For example, the hearing aid determines whether an advertisement play mode is on. In such an example, the hearing aid determines whether the advertisement play mode is on based on a predetermined cycle, environment information, a user input, a control signal received from a paired external device.

When the advertisement play mode is determined to be on, the method determines whether an agreement from the user is present in 420. For example, the hearing aid determines whether an agreement from the user is present in 420. For example, the hearing aid plays a sound effect or an announcement seeking an agreement from the user and determines whether the agreement is received from the user.

When the agreement is determined to be present, the method plays the advertisement in 430. For example, the hearing aid plays the advertisement. For example, the hearing aid converts an operating mode from a first mode for performing a general function as a hearing aid to a second mode for playing an audible advertisement, and generates a sound signal including a sound input and the audible advertisement. The hearing aid potentially converts the operating mode to the first mode again after the generated sound signal is played.

In 440, the method generates a sound signal associated with a reward. For example, the hearing aid generates a sound signal associated with a reward. For example, the hearing aid records listening statistics associated with the advertisement after the advertisement is played in 430. The hearing aid determines, based on the recorded statistics, whether a requirement for the reward is satisfied and whether to generate a sound signal associated with the reward. As a result of the determination, in an example, the hearing aid generates a sound signal including information on a cumulative number of times of an advertisement currently being played and a current reward to be granted to the user, and plays the generated sound signal.

In another example, operation 410 or operation 420 is performed by an external device paired with the hearing aid. In 410, the external device determines whether the advertisement play mode is on based on the predetermined cycle, the environment information, and the input of the user. The external device generates a control signal to control the operating mode of the hearing aid and transmits the generated control mode to the hearing aid. The hearing aid operates based on the received control signal. In 420, the external device receives the agreement from the user using an interface included in the external device. The external device informs the hearing aid of whether the agreement is received from the user.

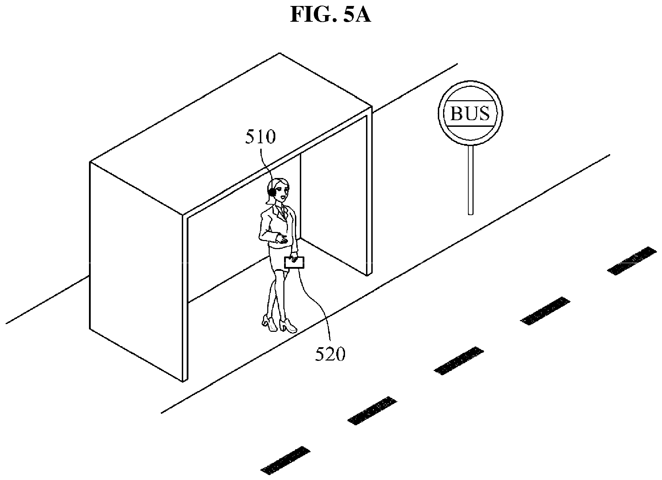

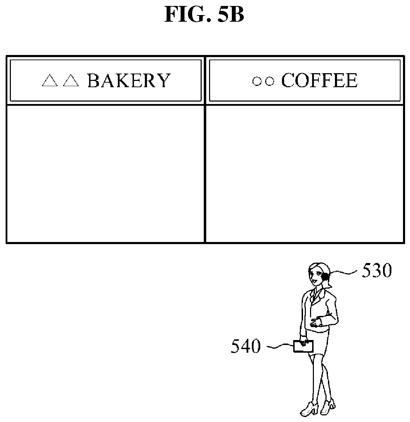

FIGS. 5A and 5B illustrate examples of playing audible data based on environmental information. Referring to FIG. 5A, a hearing aid 510 play the audible data including useful information for a user based on the environment information. For example, the hearing aid 510 collects the environment information indicating that the user is currently near a bus stop. The hearing aid 510 generates the audible data including information on operating intervals of a bus frequently used by the user, and plays the generated audible data. Such information is generated in a manner that provides the user with information that is relevant to the environmental context.

For another example, audible data is generated by an external device 520 paired with the hearing aid 510. The external device 520 refers to a device paired with the hearing aid 510 in advance, for example, a smartphone of the user. The external device 520 collects the environment information indicating that the user is currently near the bus stop. The external device 520 generates the audible data including information on operating intervals of a bus frequently used by the user and transmits the generated audible data to the hearing aid 510. The hearing aid 510 plays the received audible data. Hence, by using a hearing aid 510 as presented in examples or a hearing aid 510 and an external device 520, a user at a bus stop is presented with useful audible information.

Referring to FIG. 5B, a hearing aid 530 plays an audible advertisement or a sound signal associated with a reward, based on environmental information. For example, the hearing aid 530 collects the environment information indicating that a user is currently near a coffee shop. In this case, the hearing aid 530 generates a sound signal including an audible advertisement associated with the coffee shop. Such an advertisement is directly related to the user's surroundings. Also, the hearing aid 530 may generate a sound signal informing of the reward associated with the coffee shop among rewards that the user may be granted. For example, the user is presented with the opportunity to obtain a free or discounted cup of coffee. The hearing aid 530 plays the generated sound signal.

For another example, a sound signal is generated by an external device 540 paired with the hearing aid 530. The external device 540 refers to a device paired with the hearing aid 530 in advance, for example, a smartphone of the user. The external device 540 collects the environment information indicating that the user is currently near the coffee shop. The external device 540 generates the sound signal including an audible advertisement associated with the coffee shop or the sound signal informing of a reward associated with the coffee shop among rewards that the user may be granted, as discussed previously. The external device 540 transmits the generated sound signal to the hearing aid 530, and the hearing aid 530 plays the received sound signal.

In order to implement the examples illustrated in FIGS. 5A and 5B, a storage 120 included in a hearing aid 100 as discussed with respect to FIGS. 1 through 3 potentially stores audible data.

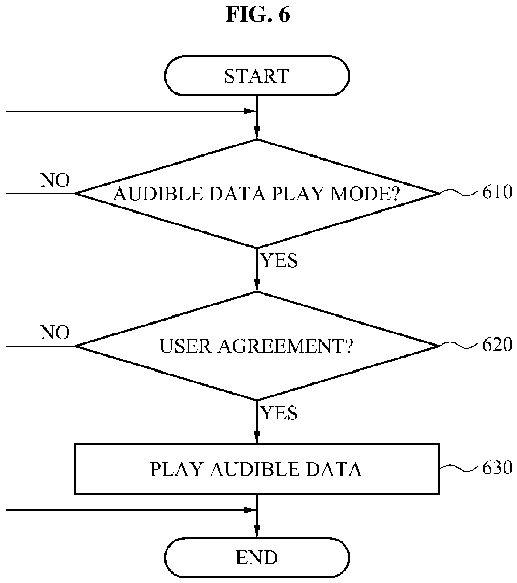

FIG. 6 is a flowchart illustrating an example of operation of a hearing aid playing audible data. Referring to FIG. 6, in 610, the method determines whether an audible data play mode is in an on state. For example, the hearing aid determines whether an audible data play mode is in an on state. In such an example, the hearing aid determines whether the audible data play mode is on based on a predetermined cycle, environment information, a user input, or a control signal received from a paired external device.

When the audible data play mode is determined to be on, the method determines whether an agreement from the user is present, in 620. For example, the hearing aid determines whether an agreement from the user is present. In such an example, the hearing aid plays a sound effect or an announcement seeking for the agreement from the user and determines whether the agreement is received from the user.

When the agreement is determined to be present, the method plays the audible data in 630. For example, the hearing aid plays the audible data. In such an example, the hearing aid converts an operating mode from a first mode for performing a general function as a hearing aid to a second mode for playing a piece of audible data, and generate a sound signal including a sound input and the audible data. Optionally, the hearing aid converts the operating mode to the first mode again after the generated sound signal is played.

Operation 610 or operation 620 is potentially performed by an external device paired with the hearing aid. For example, the external device determines whether an audible data play mode is on based on the predetermined cycle, the environment information, or the user input. The external device generates a control signal to control the operation mode of the hearing aid and transmits the generated control signal to the hearing aid. The hearing aid operates based on the received control signal. In 620, the external device receives the agreement from the user using an interface included in the external device. The external device informs the hearing aid of whether the agreement is received from the user.

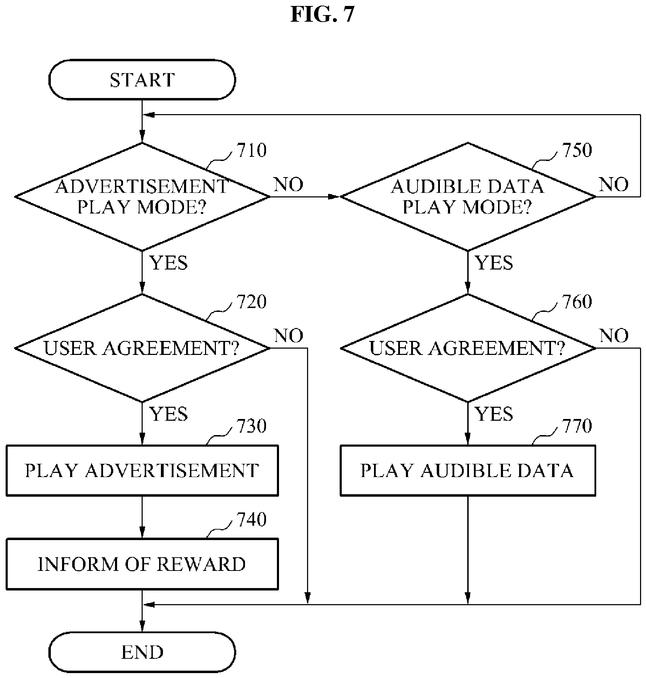

FIG. 7 is a flowchart illustrating an example of operation of a hearing aid playing an audible advertisement and audible data.

Referring to FIG. 7, in 710, the method determines whether an advertisement play mode is in an on state. For example, the hearing aid determines whether an advertisement play mode is in an on state. In such an example, the hearing aid determines whether the advertisement play mode is on based on a predetermined cycle, environment information, a user input, or a control signal received from a paired external device.

When the advertisement play mode is determined to be on, the method determines whether an agreement from the user is present in 720. For example, a hearing aid determines whether an agreement from the user is present. In such an example, the hearing aid plays a sound effect or an announcement seeking for the agreement from the user and determines whether the agreement is received from the user.

When the agreement is determined to be present, the method plays an advertisement in 730. For example, the hearing aid pays an advertisement. In such an example, the hearing aid converts an operation mode from a first mode for performing a general function as a hearing aid to a second mode for playing an audible advertisement, and generates a sound signal including a sound input and the audible advertisement. The hearing aid optionally converts the operating mode to the first mode again after the generated sound signal is played.

In 740, the method plays a sound signal associated with a reward. For example, the hearing aid plays a sound signal associated with a reward. In such an example, after the advertisement is played in 730, the hearing aid records listening statistics associated with the advertisement. The hearing aid determines whether a requirement for the reward is satisfied or whether to generate a sound signal associated with the reward, based on the recorded statistics. As a result of the determination, the hearing aid generates a sound signal including information on a cumulative number of times of a current advertisement is listened to and the current reward to be granted to the user, and plays the generated sound signal.

In 750, the method determines whether an audible data play mode is in an on state. For example, the hearing aid determines whether an audible data play mode is in an on state. In such an example, the hearing aid determine whether the audible data play mode is on based on the predetermined cycle, the environment information, the user input, or the control signal received from the paired external device.

When the audible data play mode is determined to be on, the method determines whether an agreement from the user is present in 760. For example, the method determines whether an agreement from the user is present. In such an example, the hearing aid plays a sound effect or an announcement seeking for the agreement from the user and determines whether the agreement is received from the user.

When the agreement is determined to be present, the method plays the audible data in 770. For example, the hearing aid plays the audible data. In such an example, the hearing aid converts the operating mode from the first mode for performing a general function as a hearing aid to the second mode for playing audible data, and generates a sound signal including the sound input and the audible data. The hearing aid optionally converts the operating mode to the first mode again after the generated sound signal is played.

The apparatuses and units described herein may be implemented using hardware components. The hardware components may include, for example, controllers, sensors, processors, generators, drivers, and other equivalent electronic components. The hardware components may be implemented using one or more general-purpose or special purpose computers, such as, for example, a processor, a controller and an arithmetic logic unit, a digital signal processor, a microcomputer, a field programmable array, a programmable logic unit, a microprocessor or any other device capable of responding to and executing instructions in a defined manner. The hardware components may run an operating system (OS) and one or more software applications that run on the OS. The hardware components also may access, store, manipulate, process, and create data in response to execution of the software. For purpose of simplicity, the description of a processing device is used as singular; however, one skilled in the art will appreciate that a processing device may include multiple processing elements and multiple types of processing elements. For example, a hardware component may include multiple processors or a processor and a controller. In addition, different processing configurations are possible, such as parallel processors.

The methods described above can be written as a computer program, a piece of code, an instruction, or some combination thereof, for independently or collectively instructing or configuring the processing device to operate as desired. Software and data may be embodied permanently or temporarily in any type of machine, component, physical or virtual equipment, computer storage medium or device that is capable of providing instructions or data to or being interpreted by the processing device. The software also may be distributed over network coupled computer systems so that the software is stored and executed in a distributed fashion. In particular, the software and data may be stored by one or more non-transitory computer readable recording mediums. The media may also include, alone or in combination with the software program instructions, data files, data structures, and the like. The non-transitory computer readable recording medium may include any data storage device that can store data that can be thereafter read by a computer system or processing device. Examples of the non-transitory computer readable recording medium include read-only memory (ROM), random-access memory (RAM), Compact Disc Read-only Memory (CD-ROMs), magnetic tapes, USBs, floppy disks, hard disks, optical recording media (e.g., CD-ROMs, or DVDs), and PC interfaces (e.g., PCI, PCI-express, WiFi, etc.). In addition, functional programs, codes, and code segments for accomplishing the example disclosed herein can be construed by programmers skilled in the art based on the flow diagrams and block diagrams of the figures and their corresponding descriptions as provided herein.

As a non-exhaustive illustration only, a terminal/device/unit described herein may refer to mobile devices such as, for example, a cellular phone, a smart phone, a wearable smart device (such as, for example, a ring, a watch, a pair of glasses, a bracelet, an ankle bracket, a belt, a necklace, an earring, a headband, a helmet, a device embedded in the cloths or the like), a personal computer (PC), a tablet personal computer (tablet), a phablet, a personal digital assistant (PDA), a digital camera, a portable game console, an MP3 player, a portable/personal multimedia player (PMP), a handheld e-book, an ultra mobile personal computer (UMPC), a portable lab-top PC, a global positioning system (GPS) navigation, and devices such as a high definition television (HDTV), an optical disc player, a DVD player, a Blu-ray player, a setup box, or any other device capable of wireless communication or network communication consistent with that disclosed herein. In a non-exhaustive example, the wearable device may be self-mountable on the body of the user, such as, for example, the glasses or the bracelet. In another non-exhaustive example, the wearable device may be mounted on the body of the user through an attaching device, such as, for example, attaching a smart phone or a tablet to the arm of a user using an armband, or hanging the wearable device around the neck of a user using a lanyard.

A computing system or a computer may include a microprocessor that is electrically connected to a bus, a user interface, and a memory controller, and may further include a flash memory device. The flash memory device may store N-bit data via the memory controller. The N-bit data may be data that has been processed and/or is to be processed by the microprocessor, and N may be an integer equal to or greater than 1. If the computing system or computer is a mobile device, a battery may be provided to supply power to operate the computing system or computer. It will be apparent to one of ordinary skill in the art that the computing system or computer may further include an application chipset, a camera image processor, a mobile Dynamic Random Access Memory (DRAM), and any other device known to one of ordinary skill in the art to be included in a computing system or computer. The memory controller and the flash memory device may constitute a solid-state drive or disk (SSD) that uses a non-volatile memory to store data.

While this disclosure includes specific examples, it will be apparent to one of ordinary skill in the art that various changes in form and details may be made in these examples without departing from the spirit and scope of the claims and their equivalents. The examples described herein are to be considered in a descriptive sense only, and not for purposes of limitation. Descriptions of features or aspects in each example are to be considered as being applicable to similar features or aspects in other examples. Suitable results may be achieved if the described techniques are performed in a different order, and/or if components in a described system, architecture, device, or circuit are combined in a different manner and/or replaced or supplemented by other components or their equivalents. Therefore, the scope of the disclosure is defined not by the detailed description, but by the claims and their equivalents, and all variations within the scope of the claims and their equivalents are to be construed as being included in the disclosure.

## Claims

1. A hearing aid, comprising:
an input unit configured to receive a sound input;
a storage configured to store an audible advertisement;
a generator configured to generate a sound signal based on the sound input and the audible advertisement, said generator being configured to operate in a first mode for performing a main function of a hearing aid and in a second mode specifically adapted for playing an audible advertisement, wherein, in said first mode, the generator generates a sound signal in which the sound input is amplified, said amplification preferably comprising selectively amplifying, from a frequency spectrum included in the sound input, at least a portion of a frequency band to be transmitted to a user, and, in said second mode, the generator controlling a ratio of loudness of a sound signal generated on the basis of the sound input to loudness of the audible advertisement to generate said sound signal; and
an output unit configured to output the sound signal;
wherein the hearing aid is configured to collect environment information, including sound environment information extracted by the generator from the sound input, and wherein the generator is configured to determine, based on the environment information including the sound environment information, at least one of an operating mode for playing the audible advertisement, a playback version of the audible advertisement, and a playback pattern of the audible advertisement,
wherein the generator is configured to convert the operation of the generator from the first mode to the second mode each time a predetermined timing cycle occurs or in response to a user input.

2. The hearing aid of claim 1, wherein the environment information comprises time information, location information, moving speed information, sound environment information, and/or hearing aid profile information.

3. The hearing aid of claim 2, wherein the hearing aid profile information comprises hearing aid information, hearing aid fitting information, information on auditory characteristics of a user of a hearing aid, and/or information on hearing aid auditory processing characteristics.

4. The hearing aid of claim 2, further comprising:
a communication unit configured to receive the audible advertisement, determined based on the environment information.

5. The hearing aid of claim 1, further comprising:
a recorder configured to record listening statistics associated with the audible advertisement,
wherein the generator is preferably configured to generate, based on the listening statistics, a sound signal associated with a reward for listening to the audible advertisement.

6. The hearing aid of claim 1, further comprising:
an interface configured to receive an agreement from a user for listening to the audible advertisement,
wherein the generator is configured to operate in an operating mode for playing the audible advertisement in response to the agreement being received from the user through the interface.

7. The hearing aid of claim 6, wherein the interface comprises at least one of
a howling recognizer configured to recognize a howling effect;
a voice recognizer configured to recognize a voice of the user;
a touch recognizer configured to recognize a touch of the user; and
a gesture recognizer configured to recognize a gesture of the user.

8. The hearing aid of claim 1, further comprising:
a communication unit configured to communicate with an external device,
wherein the communication unit is configured to receive an audible advertisement from the external device.

9. The hearing aid of claims 3 and 8, wherein the communication unit is configured to receive the audible advertisement based on the hearing aid profile information in a version.

10. The hearing aid of claim 1, further comprising:
a communication unit configured to communicate with an external device paired with the hearing aid,
wherein the communication unit is configured to receive, from the external device, a control signal to control an operating mode of the generator, and the generator is configured to operate in the operating mode corresponding to the control signal, or
wherein the communication unit is configured to receive an agreement from the user for listening to the audible advertisement input through the external device, and the generator is configured to operate in the operating mode for playing the audible advertisement in response to the agreement being received from the user through the communication unit, or
wherein the communication unit is configured to transmit, to the external device, a signal indicating whether the audible advertisement is to be listened to and the external device is configured to record listening statistics associated with the audible advertisement, or
wherein the communication unit is configured to receive listening statistics information associated with the audible advertisement from the external device, and the generator is configured to generate a sound signal associated with a reward for listening to the audible advertisement based on the received listening statistics information, or
wherein the communication unit is configured to receive, from the external device, a sound signal associated with a reward for listening to the audible advertisement, and the external device is configured to generate a sound signal associated with the reward based on listening statistics associated with the audible advertisement.

11. A hearing aid method, comprising:
receiving a sound input;
obtaining an audible advertisement;
extracting sound environment information from the sound input;
collecting environment information, including the sound environment information;
determining, based on the environment information including the sound environment information, at least one of an operating mode for playing the audible advertisement, a playback version of the audible advertisement, and a playback pattern of the audible advertisement;
generating a sound signal based on the sound input and the audible advertisement; and
outputting the sound signal;
said generating comprising operating in a first mode for performing a main function of a hearing aid and operating in a second mode specifically adapted for playing an audible advertisement, wherein, in said first mode, said generating comprising generating a sound signal in which the sound input is amplified, said amplification preferably comprising selectively amplifying, from a frequency spectrum included in the sound input, at least a portion of a frequency band to be transmitted to a user, and, in said second mode, said generating comprising controlling a ratio of loudness of a sound signal generated on the basis of the sound input to loudness of the audible advertisement to generate said sound signal,
wherein the operation mode is converted from the first mode to the second mode each time a predetermined timing cycle occurs or in response to a user input.

12. The method of claim 11, wherein the obtaining comprises:
receiving an audible advertisement determined based on environment information.

13. A non-transitory computer-readable storage medium comprising a program for a hearing aid method, the program comprising instructions for causing a computer to perform the method of claim 11.

## Patentansprüche

1. Hörgerät, das umfasst:
eine Eingabeeinheit, die dazu konfiguriert ist, eine Toneingabe zu empfangen;
einen Speicher, der dazu konfiguriert ist, eine hörbare Werbeanzeige zu speichern;
eine Erzeugungseinrichtung, die dazu konfiguriert ist, ein Tonsignal zu erzeugen basierend auf der Toneingabe und der hörbaren Werbeanzeige, wobei die Erzeugungseinrichtung dazu konfiguriert ist, in einem ersten Modus betrieben zu werden, um eine Hauptfunktion des Hörgeräts durchzuführen, und in einem zweiten Modus, der speziell dazu ausgerichtet ist, eine hörbare Werbeanzeige abzuspielen, wobei die Erzeugungseinrichtung in dem ersten Modus ein Tonsignal erzeugt, in dem die Toneingabe verstärkt wird, wobei die Verstärkung vorzugsweise ein wahlweises Verstärken wenigstens eines Teiles eines Frequenzbandes aus einem Frequenzspektrum, das in der Toneingabe beinhaltet ist, umfasst, um diesen Teil des Frequenzbandes an einen Benutzer zu übertragen, und die Erzeugungseinrichtung in dem zweiten Modus ein Verhältnis der Lautstärke eines Tonsignals, das auf der Basis der Toneingabe erzeugt worden ist, zu der Lautstärke der hörbaren Werbeanzeige steuert, um das Tonsignal zu erzeugen; und
eine Ausgabeeinheit, die dazu konfiguriert ist, das Tonsignal auszugeben;
wobei das Hörgerät dazu konfiguriert ist, Umgebungsinformationen einschließlich Tonumgebungsinformationen, die von der Erzeugungseinrichtung aus der Toneingabe extrahiert worden sind, zu sammeln, und wobei die Erzeugungseinrichtung dazu konfiguriert ist, basierend auf den Umgebungsinformationen einschließlich den Tonumgebungsinformationen einen Betriebsmodus zum Abspielen der hörbaren Werbeanzeige und/oder einer Wiedergabeversion der hörbaren Werbeanzeige und/oder eines Wiedergabemusters der hörbaren Werbeanzeige zu bestimmen,
wobei die Erzeugungseinrichtung dazu konfiguriert ist, den Betrieb der Erzeugungseinrichtung von dem ersten Modus in den zweiten Modus umzuschalten, jedes Mal, wenn ein vorbestimmter Zeitzyklus auftritt oder als Reaktion auf eine Benutzereingabe.

2. Hörgerät gemäß Anspruch 1, wobei die Umgebungsinformationen umfassen: Zeitinformationen, Standortinformationen, Bewegungsgeschwindigkeitsinformationen, Tonumgebungsinformationen und/oder Hörgeräteprofilinformationen.

3. Hörgerät gemäß Anspruch 2, wobei die Hörgeräteprofilinformationen umfassen:
Hörgeräteinformationen, Informationen über eine Passform des Hörgeräts, Informationen über auditive Eigenschaften eines Benutzers des Hörgeräts und/oder Informationen über auditive Verarbeitungseigenschaften des Hörgeräts.

4. Hörgerät gemäß Anspruch 2, das weiterhin umfasst:
eine Kommunikationseinheit, die dazu konfiguriert ist, die hörbare Werbeanzeige, die bestimmt wird basierend auf den Umgebungsinformationen, zu empfangen.

5. Hörgerät gemäß Anspruch 1, das weiterhin umfasst:
eine Aufzeichnungseinrichtung, die dazu konfiguriert ist, Hörstatistiken, die mit der hörbaren Werbeanzeige verknüpft sind, aufzuzeichnen,
wobei die Erzeugungseinrichtung vorzugsweise dazu konfiguriert ist, basierend auf den Hörstatistiken ein Tonsignal zu erzeugen, das mit einer Belohnung für das Anhören der hörbaren Werbeanzeige verknüpft ist.

6. Hörgerät gemäß Anspruch 1, das weiterhin umfasst:
eine Schnittstelle, die dazu konfiguriert ist, eine Zustimmung von dem Benutzer für das Anhören der hörbaren Werbeanzeige zu empfangen,
wobei die Erzeugungseinrichtung dazu konfiguriert ist, in einem Betriebsmodus zum Abspielen der hörbaren Werbeanzeige betrieben zu werden als Reaktion darauf, dass die von dem Benutzer gegebene Zustimmung durch die Schnittstelle empfangen worden ist.

7. Hörgerät gemäß Anspruch 6, wobei die Schnittstelle wenigstens eines der folgenden umfasst:
eine Einrichtung zur Erkennung einer akustischen Rückkopplung, die dazu konfiguriert ist, eine akustische Rückkopplung zu erkennen;
eine Stimmerkennungseinrichtung, die dazu konfiguriert ist, die Stimme des Benutzers zu erkennen;
eine Berührungserkennungseinrichtung, die dazu konfiguriert ist, eine Berührung des Benutzers zu erkennen; und
eine Gestenerkennungseinrichtung, die dazu konfiguriert ist, eine Geste des Benutzers zu erkennen.

8. Hörgerät gemäß Anspruch 1, das weiterhin umfasst:
eine Kommunikationseinheit, die dazu konfiguriert ist, mit einer externen Vorrichtung zu kommunizieren,
wobei die Kommunikationseinheit dazu konfiguriert ist, eine hörbare Werbeanzeige von der externen Vorrichtung zu empfangen.

9. Hörgerät gemäß den Ansprüchen 3 und 8, wobei die Kommunikationseinheit dazu konfiguriert ist, die hörbare Werbeanzeige basierend auf den Hörgeräteprofilinformationen in einer Version zu empfangen.

10. Hörgerät gemäß Anspruch 1, das weiterhin umfasst:
eine Kommunikationseinheit, die dazu konfiguriert ist, mit einer externen Vorrichtung, die mit dem Hörgerät gepaart ist, zu kommunizieren,
wobei die Kommunikationseinheit dazu konfiguriert ist, von der externen Vorrichtung ein Steuersignal zu empfangen, um einen Betriebsmodus der Erzeugungseinrichtung zu steuern, und die Erzeugungseinrichtung dazu konfiguriert ist, in dem mit dem Steuersignal korrespondierenden Betriebsmodus betrieben zu werden, oder
wobei die Kommunikationseinheit dazu konfiguriert ist, eine von dem Benutzer gegebene Zustimmung zum Anhören der hörbaren Werbeanzeige, die durch die externe Vorrichtung eingegeben wird, zu empfangen, und die Erzeugungseinrichtung dazu konfiguriert ist, in dem Betriebsmodus zum Abspielen der hörbaren Werbeanzeige betrieben zu werden als Reaktion darauf, dass die von dem Benutzer gegebene Zustimmung durch die Kommunikationseinheit empfangen worden ist, oder
wobei die Kommunikationseinheit dazu konfiguriert ist, an die externe Vorrichtung ein Signal zu übertragen, das darauf hinweist, ob die hörbare Werbeanzeige angehört werden soll, und die externe Vorrichtung dazu konfiguriert ist, Hörstatistiken, die mit der hörbaren Werbeanzeige verknüpft sind, aufzuzeichnen, oder
wobei die Kommunikationseinheit dazu konfiguriert ist, von der externen Vorrichtung stammende Hörstatistikinformationen, die mit der hörbaren Werbeanzeige verknüpft sind, zu empfangen, und die Erzeugungseinrichtung dazu konfiguriert ist, ein Tonsignal zu erzeugen, das mit einer Belohnung für das Anhören der hörbaren Werbeanzeige verknüpft ist, basierend auf den empfangenen Hörstatistikinformationen, oder
wobei die Kommunikationseinheit dazu konfiguriert ist, ein von der externen Vorrichtung stammendes Tonsignal zu empfangen, das mit einer Belohnung für das Anhören der hörbaren Werbeanzeige verknüpft ist, und die externe Vorrichtung dazu konfiguriert ist, ein Tonsignal zu erzeugen, das mit der Belohnung verknüpft ist, basierend auf Hörstatistiken, die mit der hörbaren Werbeanzeige verknüpft sind.

11. Hörgeräteverfahren, das umfasst:
Empfangen einer Toneingabe;
Erhalten einer hörbaren Werbeanzeige;
Extrahieren von Tonumgebungsinformationen aus der Toneingabe;
Sammeln von Umgebungsinformationen einschließlich den Tonumgebungsinformationen;
Bestimmen, basierend auf den Umgebungsinformationen einschließlich den Tonumgebungsinformationen eines Betriebsmodus zum Abspielen der hörbaren Werbeanzeige und/oder einer Wiedergabeversion der hörbaren Werbeanzeige und/oder eines Wiedergabemusters der hörbaren Werbeanzeige;
Erzeugen eines Tonsignals basierend auf der Toneingabe und der hörbaren Werbeanzeige; und
Ausgeben des Tonsignals;
wobei das Erzeugen umfasst: Betreiben in einem ersten Modus, um eine Hauptfunktion eines Hörgeräts durchzuführen, und Betreiben in einem zweiten Modus, der speziell dazu ausgerichtet ist, eine hörbare Werbeanzeige abzuspielen, wobei das Erzeugen in dem ersten Modus das Erzeugen eines Tonsignals umfasst, in dem die Toneingabe verstärkt wird, wobei die Verstärkung vorzugsweise ein wahlweises Verstärken wenigstens eines Teiles eines Frequenzbandes aus einem Frequenzspektrum, das in der Toneingabe beinhaltet ist, umfasst, um diesen Teil des Frequenzbandes an einen Benutzer zu übertragen, und das Erzeugen in dem zweiten Modus das Steuern eines Verhältnisses der Lautstärke eines Tonsignals, das auf der Basis der Toneingabe erzeugt worden ist, zu der Lautstärke der hörbaren Werbeanzeige, um das Tonsignal zu erzeugen, umfasst; und
wobei der Betriebsmodus von dem ersten Modus in den zweiten Modus umgeschaltet wird, jedes Mal, wenn ein vorbestimmter Zeitzyklus auftritt oder als Reaktion auf eine Benutzereingabe.

12. Verfahren gemäß Anspruch 11, wobei das Erhalten umfasst:
Empfangen einer hörbaren Werbeanzeige, die bestimmt wird basierend auf den Umgebungsinformationen.

13. Übergangsloses computerlesbares Speichermedium, das ein Programm für ein Hörgeräteverfahren umfasst, wobei das Programm Anweisungen umfasst, die einen Computer veranlassen, das Verfahren gemäß Anspruch 11 durchzuführen.

## Revendications

1. Prothèse auditive, comprenant :
une unité d'entrée configurée pour recevoir une entrée sonore,
une mémoire configurée pour stocker une publicité audio,
un dispositif générateur configuré pour produire un signal sonore en fonction de l'entrée sonore et de la publicité audio, ledit dispositif générateur étant configuré pour fonctionner selon un premier mode destiné à offrir une fonction principale de prothèse auditive et selon un second mode conçu spécifiquement pour permettre la diffusion d'une publicité audio, en sachant que, dans ledit premier mode, le dispositif générateur produit un signal sonore dans lequel l'entrée sonore est amplifiée, ladite amplification comprenant de préférence une amplification sélective, dans le spectre de fréquences inclus dans l'entrée sonore, d'au moins une partie de la bande de fréquence destinée à parvenir à un utilisateur, et, dans ledit second mode, le dispositif générateur contrôle un rapport existant entre l'intensité sonore d'un signal sonore produit sur la base de l'entrée sonore et l'intensité sonore de la publicité audio afin de produire ledit signal sonore, et
une unité de sortie configurée pour émettre le signal sonore ;
dans lequel la prothèse auditive est configurée pour recueillir des informations d'environnement, parmi lesquelles des informations d'environnement sonore extraites de l'entrée sonore par le dispositif générateur, le dispositif générateur étant configuré pour déterminer, au regard des informations d'environnement comportant les informations d'environnement sonore, l'un des éléments suivants : un mode de fonctionnement permettant la diffusion de la publicité audio, une version de restitution de la publicité audio et un découpage de restitution de la publicité audio, dans lequel le dispositif générateur est configuré pour faire passer le fonctionnement du dispositif générateur du premier mode au second mode chaque fois qu'un temps de transition prédéterminé se produit ou en réaction à une entrée utilisateur.

2. Prothèse auditive selon la revendication 1, dans lequel les informations d'environnement comprennent des informations horaires, des informations de localisation, des informations de vitesse de déplacement, des informations d'environnement sonore et/ou des informations de profil de la prothèse auditive.

3. Prothèse auditive selon la revendication 2, dans lequel les informations de profil de la prothèse auditive comprennent des informations relatives à la prothèse auditive, des informations relatives à l'ajustage de la prothèse auditive, des informations relatives aux caractéristiques de l'audition de l'utilisateur de la prothèse auditive, et/ou des informations relatives aux caractéristiques de traitement sonore de la prothèse auditive.

4. Prothèse auditive selon la revendication 2, comprenant en outre :
une unité de communication configurée pour recevoir la publicité audio déterminée au regard des informations d'environnement.

5. Prothèse auditive selon la revendication 1, comprenant en outre :
un enregistreur configuré pour enregistrer des statistiques d'écoute associées à la publicité audio ; le dispositif générateur étant de préférence configuré pour produire, au regard des statistiques d'écoute, un signal sonore associé à un bénéfice accordé pour avoir écouté la publicité audio.

6. Prothèse auditive selon la revendication 1, comprenant en outre :
une interface configurée pour recevoir un consentement de l'utilisateur pour écouter la publicité audio ;
le dispositif générateur étant configuré pour fonctionner selon un mode de fonctionnement permettant la diffusion de la publicité audio en réaction à la réception du consentement de l'utilisateur par le biais de l'interface.

7. Prothèse auditive selon la revendication 6, dans lequel l'interface comprend au moins l'un des dispositifs suivants :
un dispositif de reconnaissance d'effet Larsen configuré pour reconnaître un effet Larsen,
un dispositif de reconnaissance vocale configuré pour reconnaître la voix de l'utilisateur,
un dispositif de reconnaissance tactile configuré pour reconnaître une entrée tactile de l'utilisateur, et
un dispositif de reconnaissance de mouvement configuré pour reconnaître un mouvement effectué par l'utilisateur.

8. Prothèse auditive selon la revendication 1, comprenant en outre :
une unité de communication configurée pour communiquer avec un périphérique externe ;
l'unité de communication étant configurée pour recevoir une publicité audio en provenance du périphérique externe.

9. Prothèse auditive selon les revendications 3 et 8, dans lequel l'unité de communication est configurée pour recevoir la publicité audio selon une certaine version en fonction des informations de profil de la prothèse auditive.

10. Prothèse auditive selon la revendication 1, comprenant en outre :
une unité de communication configurée pour communiquer avec un périphérique externe appairé à la prothèse auditive ;
l'unité de communication étant configurée pour recevoir, en provenance du périphérique externe, un signal de commande permettant de commander le mode de fonctionnement du dispositif générateur, et le dispositif générateur étant configuré pour fonctionner selon le mode de fonctionnement correspondant au signal de commande, ou
l'unité de communication étant configurée pour recevoir un consentement de l'utilisateur pour écouter la publicité audio, entré par le biais du périphérique externe, et le dispositif générateur étant configuré pour fonctionner selon le mode de fonctionnement permettant la diffusion de la publicité audio en réaction à la réception du consentement de l'utilisateur par le biais de l'unité de communication, ou
l'unité de communication étant configurée pour transmettre, auprès du périphérique externe, un signal indiquant si la publicité audio peut être écoutée, et le périphérique externe étant configuré pour enregistrer des statistiques d'écoute associées à la publicité audio, ou
l'unité de communication étant configurée pour recevoir des informations de statistiques d'écoute associées à la publicité audio en provenance du périphérique externe, et le dispositif générateur étant configuré pour produire un signal sonore associé à un bénéfice accordé pour avoir écouté la publicité audio au regard des informations de statistiques d'écoute reçues, ou
l'unité de communication étant configurée pour recevoir, en provenance du périphérique externe, un signal sonore associé à un bénéfice accordé pour avoir écouté la publicité audio, et le périphérique externe étant configuré pour produire un signal sonore associé au bénéfice en fonction des statistiques d'écoute associées à la publicité audio.

11. Procédé relatif à une prothèse auditive, comprenant :
la réception d'une entrée sonore,
l'obtention d'une publicité audio,
l'extraction d'informations d'environnement sonore issues de l'entrée sonore,
le recueil d'informations d'environnement, parmi lesquelles lesdites informations d'environnement sonore,
la détermination, au regard des informations d'environnement comportant les informations d'environnement sonore, d'un mode de fonctionnement permettant la diffusion de la publicité audio, d'une version de restitution de la publicité audio, et/ou d'un découpage de restitution de la publicité audio,
la production d'un signal sonore sur la base de l'entrée sonore et de la publicité audio, et
l'émission du signal sonore ;
ladite production comprenant un fonctionnement selon un premier mode destiné à offrir une fonction principale de prothèse auditive et un fonctionnement selon un second mode conçu spécifiquement pour permettre la diffusion d'une publicité audio, en sachant que, dans ledit premier mode, ladite production comprend la production d'un signal sonore dans lequel l'entrée sonore est amplifiée, ladite amplification comprenant de préférence une amplification sélective, dans le spectre de fréquences inclus dans l'entrée sonore, d'au moins une partie de la bande de fréquence destinée à parvenir à un utilisateur, et, dans ledit second mode, ladite production comprend le contrôle d'un rapport existant entre l'intensité sonore d'un signal sonore produit sur la base de l'entrée sonore et l'intensité sonore de la publicité audio afin de produire ledit signal sonore,
le mode de fonctionnement passant du premier mode au second mode chaque fois qu'un temps de transition prédéterminé se produit ou en réaction à une entrée utilisateur.

12. Procédé selon la revendication 11, dans lequel l'obtention comprend :
la réception d'une publicité audio déterminée au regard des informations d'environnement.

13. Support de mémoire non transitoire lisible par voie informatique, comprenant un programme afférant à un procédé relatif à une prothèse auditive, ledit programme comprenant des instructions permettant à un dispositif informatique de mettre en oeuvre le procédé selon la revendication 11.
